# EUROPÄISCHE PATENTSCHRIFT

(11) **EP 2 728 132 B1**
(45) Veröffentlichungstag und Bekanntmachung des Hinweises auf die Patenterteilung: **09.08.2017**
(21) Anmeldenummer: 13188222.7
(22) Anmeldetag: 11.10.2013
(51) Int. Cl.: F01K 27/02, F01K 3/16, F01D 15/10, F01D 25/22, F01K 11/02, F24H 1/20

(54) **Speicherbehälter**
Storage tank
Récipient de stockage

(30) Priorität: 05.11.2012 DE 202012104222 U
(43) Veröffentlichungstag der Anmeldung: 07.05.2014
(73) Patentinhaber: Thiessen, Ludmila, 33758 Schloß Holte-Stukenbrock (DE); Henrichs, Thomas, 33788 Schloß Holte-Stukenbrock (DE)
(72) Erfinder: Thiessen, Ludmila, 33758 Schloß Holte-Stukenbrock (DE); Henrichs, Thomas, 33788 Schloß Holte-Stukenbrock (DE)
(74) Vertreter: Ostermann, Thomas

(56) Entgegenhaltungen:
- DE-A1-102006 011 380
- FR-A1- 2 387 353
- GB-A- 464 714
- US-A- 1 558 223

## Beschreibung

Die Erfindung betrifft einen Speicherbehälter für eine Heizungsanlage nach dem Oberbegriff des Patentanspruchs 1.
Aus der US 4 362 020 ist eine Turbinen-Generator-Baueinheit bekannt, bei der eine extern zugeführte Prozesswärme in elektrische Energie umgewandelt wird. Die Prozesswärme wird mittels eines Wärmeübertragers an eine Dampfzuleitung abgegeben und der Turbine zugeführt. Eine Speisepumpe ist erforderlich, um die Zirkulation des Dampfes zu ermöglichen. Darüber ist ein Kondensator vorgesehen zur Verflüssigung des Dampfes, wobei ein Kondensat mittels der Kondensatpumpe von dem Kondensator zu Lagern einer Welle des Generators bzw. der Turbine geleitet wird.

Aus der DE 10 2006 011 380 A1 ist eine Wärmekraftmaschine mit einem Energieträgerkreislauf bekannt, in dem ein Energiespeichermedium umläuft. Das Energiespeichermedium wird mit Wärmeenergie angereichert, so dass die angespeicherte Energie zum Antreiben eines Motors dienen kann. Dieser Motor kann einen Generator antreiben, mittels dessen elektrische Energie bereitgestellt werden kann.

Aus der US 1 558 223 A ist ein Speicherbehälter für eine Heizungsanlage bekannt, in dem eine Turbine angeordnet ist. Dieser Turbine ist ein externer Dampf zuführbar, der dann umgewandelt wird in mechanische Leistung, Dampf oder heißes Wasser für industrielle Zwecke.

Aufgabe der vorliegenden Erfindung ist es, einen Speicherbehälter für eine Heizungsanlage derart weiterzubilden, dass die Bereitstellung einer Stromgenerierung einfacher, effektiver und kostengünstiger ist.

Zur Lösung der Aufgabe weist die Erfindung die Merkmale des Patentanspruchs 1 auf.
Nach der Erfindung wird ein mit Wasser gefüllter Speicherbehälter, der vorzugsweise Bestandteil einer Heizungsanlage ist, für die Aufnahme einer Stromerzeugungseinheit genutzt. Die Stromerzeugungseinheit besteht im Wesentlichen aus einer Turbine und einem Generator, die über eine gemeinsame Welle miteinander verbunden sind. Vorteilhaft kann das in dem Speicherbehälter gespeicherte Wasser zu Kühlzwecken eingesetzt werden. Auch lässt sich die Anzahl der Pumpen reduzieren, so dass insgesamt eine kompakte und effektive Stromerzeugungsanlage geschaffen ist. Diese ist platzsparend innerhalb des Speicherbehälters angeordnet.

Nach der Erfindung sind die Turbine und der Generator in einer hermetisch abgeschlossenen Baueinheit angeordnet, die von einem Dämmmaterial zumindest im Bereich des Generators und der Turbine umgeben ist. Diese Baueinheit ist vorzugsweise ein Gehäuseoberteil des Speicherbehälters, wobei das Dämmmaterial zu einer akustischen Isolierung bzw. Vibrationsvermeidung führt. Die akustische Isolierung wird weiterhin begünstigt dadurch, dass ein Gehäuseunterteil des Speicherbehälters mit Wasser gefüllt ist. Auf diese Weise kann eine isolierende Entkopplung zwischen der Stromerzeugungseinheit und dem im Speicherbehälter gespeicherten Wasser realisiert werden.

Nach der Erfindung ist die Speisepumpe benachbart zu dem Kondensator angeordnet. Eine ansonsten erforderliche Leitungsverbindung ist nicht erforderlich. Die Speisepumpe ist hierbei direkt über einen Saugstutzen mit dem Kondensator verbunden. Die Speisepumpe steht unter dem gleichen Druck (Abdampfdruck) wie die im Gehäuseoberteil angeordneten Lager, der Generator sowie die Turbine. Die Speisepumpe hat den kleinsten Ansaugwiderstand.

Nach der Erfindung sind die Turbine, der Generator und der Kondensator in einem vakuumisierten Gehäuse angeordnet. Vorteilhaft ist das Gehäuse kompakt ausgebildet. Die Wegstrecke für den Dampf, die Wärmeübertragung und für das Kondensat sind relativ gering. Das das Gehäuse umgebende Wasser im Speicherbehälter dient zur Wärmeaufnahme und wirkt sich akustisch isolierend bzw. vibrationshemmend aus. Etwaige Verluste des Generators, der Lager, der Speisepumpe (Reibungsverluste) werden durch das Wasser aufgenommen. Das Gehäuse ist stets durch das Wasser bzw. durch das Dämmmaterial zu der Umgebung abgeschlossen. Hierdurch weist das Gehäuse einen kompakten Aufbau auf und eine effektive Stromerzeugung bereit gestellt werden.

Nach einer Weiterbildung der Erfindung weist der Kondensator aufrechte Kühlrohre auf, durch die das im Speicherbehälter gespeicherte Wasser strömt. Die Kühlrohre sind derart ausgebildet, dass eine selbsttätige Zirkulation des bezüglich der Baueinheit kühlenden Wassers erfolgt.

Nach einer Weiterbildung der Erfindung werden Lager der den Generator und die Turbine durchsetzenden Welle durch ein flüssiges Arbeitsmedium, das aus einer Druckleitung der Speisepumpe entnommen wird, geschmiert und gekühlt. Auf diese Weise hat die Stromerzeugungseinheit einen kompakten und einfachen Aufbau.

Weitere Vorteile der Erfindung ergeben sich aus den weiteren Unteransprüchen.

Ein Ausführungsbeispiel der Erfindung wird nachfolgend anhand der Zeichnungen näher erläutert.
- Figur: Ein schematischer Längsschnitt durch einen erfindungsgemäßen Speicherbehälter.

Ein Speicherbehälter 1 kann vorzugsweise als Warmwasserbehälter für eine Heizungsanlage in kleineren oder größeren Gebäuden verwendet werden. Der Speicherbehälter 1 weist einen Speicherraum auf, in dem Wasser 2 gespeichert ist. Zusätzlich weist der Speicherbehälter 1 einen Anschluss 3 für eine Wasserentnahme sowie einen Anschluss 4 für einen Wasserzulauf auf, die jeweils mit Heizkörpern der Heizungsanlage verbunden sind.

Mittig ist in dem Speicherbehälter 1 eine Stromerzeugungseinheit 5 angeordnet, die im Wesentlichen eine Turbine 6 und einen Generator 7 umfasst. Unterhalb der Turbine 6 ist ein Kondensator 8 angeordnet.

Die Turbine 6 und der Generator 7 befinden sich in einem gemeinsamen Gehäuseoberteil 9a und stehen unter dem gleichen Abdampfdruck wie der Kondensator 8.

In vertikaler Richtung unterhalb des Kondensators 8 schließt sich direkt eine Speisepumpe 10 an, die lediglich über einen Saugstutzen 11 mit dem Kondensator 8 verbunden ist. Ein sich in dem Kondensator 8 bildendes Kondensat 12 wird mittels der Speisepumpe 10 über Lagerzuführungsleitungen 13 Lagerstellen 14 einer die Turbine 6 und den Generator 7 durchsetzenden Welle 15 zugeführt, die von einer Mitte der Speisepumpe 10 verbundene Speiseleitung 17 abzweigt. Die Welle 15 ist vorzugsweise über ein Gleitlager gelagert. Die Turbine 6 ist benachbart zu dem Generator 7 angeordnet. Das Kondensat 12 wird somit zur Schmierung der Lagerstellen 14 genutzt.

Die Turbine 6 und der Generator 7 bilden eine Baueinheit, die von einem Dämmmaterial 16 umgeben ist. Dieses Dämmmaterial 16 umgibt somit ein Gehäuseoberteil 9a des Gehäuses 9. Ein in vertikaler Richtung unterhalb des Gehäuseoberteils 9a angeordnetes Gehäuseunterteil 9c weist die Speisepumpe 10 auf.

Neben der Lagerzuführungsleitung 13 ist eine Speiseleitung 17 vorgesehen zur Zuführung des Kondensats 12 zu einem nicht dargestellten Kessel der Heizungsanlage.

Der Kondensator 8 weist aufrechte Kühlrohre 18 auf, durch die das in dem Speicherraum gespeicherte Wasser 2 strömbar ist zur Kühlung im unteren Bereich des Gehäuses 9, wobei sich auf einer Innenseite der aufrechten Wandung des Gehäuseunterteils 9b das Kondensat 12 bildet. Die Wände des Gehäuseunterteils 9b bilden zugleich eine Wärmeaustauschfläche des Kondensators 8.

Zwischen dem Gehäuseoberteil 9a und dem Gehäuseunterteil 9c ist der Kondensator 8 angeordnet, der eine aufrechte Gehäusewand 9b aufweist. Das Gehäuseoberteil 9a, das Gehäuseteil 9c und die Gehäusewand 9b des Kondensators 8 umschließen einen gemeinsamen Raum, in dem ein gleicher Innendruck herrscht. Der durch das Gehäuse 9 abgeschlossene Innenraum verhindert das Entweichen des Arbeitsmediums. Die Speisepumpe 10 befindet sich in dem Gehäuseunterteil 9c. Der Druck in dem Gehäuseunterteil 9c wird durch das Rohr 19 mit dem Druck in dem Kondensator 8 ausgeglichen. Zwischen dem Gehäuseunterteil 9c und dem Kondensator 8 ist eine Trennwand 27 angeordnet, die den Kondensator 8 und das Unterteil 9c derart trennt, dass das Kondensat 12 nicht die Speisepumpe 10 fluten kann.

In dem Dämmmaterial 16 erstreckt sich eine Zudampfleitung 20 zu der Turbine 6, damit ein extern erzeugter Dampf zum Antrieb der Turbine 6 derselben zugeführt werden kann.

Der Generator 7 besteht in üblicher Weise aus einem Rotor 7' und einem Stator 7", von dem die erzeugte elektrische Energie über ein Stromkabel 26 abgreifbar ist.

Die Turbinen/Generator-Baueinheit ist über eine Düse 24 und eine Trennwand 21 von dem Kondensator 8 getrennt angeordnet. Das aus dem Lager 14 in einen Generatorraum 25 fließende Arbeitsmedium dient auch zur Kühlung des Generators 7. Ein in der Baueinheit integriertes Überlaufrohr 22 begrenzt das zur Kühlung dienende Arbeitsmedium innerhalb des Generatorraumes 25 und dient zum Druckausgleich, so dass kein Dampf von der Turbine 6 zu dem Generator 7 strömen kann. Zur Kühlung wird das Kondensat 12 genutzt. Die Speisepumpe 10 dient gleichzeitig als Kondensatpumpe. Ein in der Baueinheit integriertes Überlaufrohr 22 begrenzt das Kühlwasserniveau 25 innerhalb eines Generatorgehäuses 23 und dient zum Druckausgleich, so dass kein Dampf von der Turbine 6 zu dem Generator 7 fließen kann. Als Kühlwasser wird das in dem Gehäuse 9 umgebenden Speicherraum gespeicherte Wasser 2 genutzt.

Das Gehäuseoberteil 9a ist über ein Flansch mit dem Gehäuseunterteil 9b verbunden, so dass das Gehäuseoberteil 9a und das Gehäuseunterteil 9b ein gemeinsames Gehäuse bilden, das von dem Wasser im Speicherraum sowie dem Dämmmaterial umgeben ist. Das Kühlwasser 2 kann mittels freier Konvektion durch die aufrechten Kühlrohre 18 des Kondensators 8 strömen.

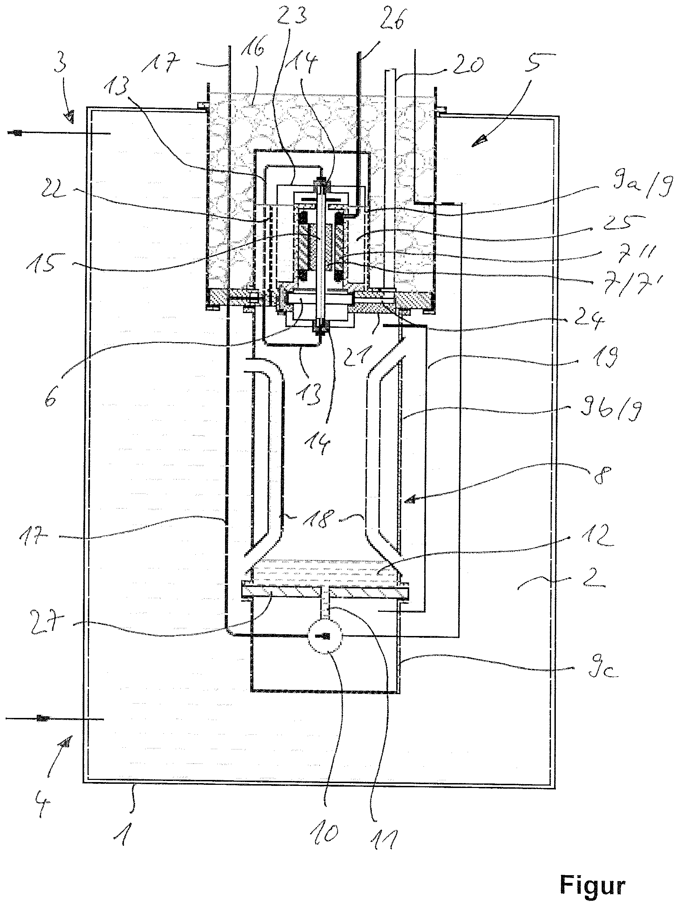

## Patentansprüche

1. Speicherbehälter (1) für eine Heizungsanlage mit einem Wasser (2) enthaltenden Speicherraum, mit einem Anschluss für eine Wasserentnahme (3) und mit einem Anschluss für einen Wasserzulauf (4), wobei in dem Speicherbehälter (1) eine Turbine (6) integriert ist, der ein extern erzeugter Dampf über eine Zudampfleitung (20) zuführbar ist, und wobei in dem Speicherbehälter (1) ein Kondensator (8) zur Kondensation des Dampfes unter Abgabe von Wärme an das Wasser (2) integriert ist, **dadurch gekennzeichnet, dass** in dem Speicherbehälter (1) eine Stromerzeugungseinheit (5) integriert ist, die einen Generator (7) aufweist, dass der Generator (7) und die Turbine (6) in einer gemeinsamen abgeschlossenen Baueinheit angeordnet sind, die von einem Dämmmaterial (16) zumindest teilweise zur akustischen Isolierung umgeben ist, dass die Turbine (6), der Generator (7) und der Kondensator (8) in einem vakuumisierten Gehäuse (9) angeordnet sind, wobei lediglich der Generator (7) durch das Arbeitsmedium gekühlt ist, dass eine Speisepumpe (10) benachbart zu dem Kondensator (8) angeordnet ist und unter dem gleichen Druck wie der Kondensator steht.

2. Speicherbehälter nach Anspruch 1, **dadurch gekennzeichnet, dass** der Kondensator (8) aufrechte Kühlrohre (18) aufweist, durch die das Kühlmedium infolge einer freien Konvektion strömt.

3. Speicherbehälter nach einem der Ansprüche 1 oder 2, **dadurch gekennzeichnet, dass** das Gehäuse (9) ein Gehäuseoberteil (9a), in dem sich eine Turbine (6) und ein Generator (7) befinden, ein die Speisepumpe (10) aufnehmendes Gehäuseunterteil (9c) und ein das obere Gehäuseoberteil (9a) mit dem Gehäuseunterteil (9c) verbindenden Kondensator (8) aufweist, wobei in dem Gehäuse (9) ein gleicher Innendruck herrscht.

4. Speicherbehälter nach einem der Ansprüche 1 bis 3, **dadurch gekennzeichnet, dass** eine Lagerzuführungsleitung (13, 17) vorgesehen ist zur Schmierung und Kühlung eines Lagers einer die Turbine (6) und den Generator (7) durchsetzenden Welle (15).

5. Speicherbehälter nach dem Anspruch 4, **dadurch gekennzeichnet, dass** das Lager als ein Gleitlager ausgebildet ist.

6. Speicherbehälter nach einem der Ansprüche 1 bis 5, **dadurch gekennzeichnet, dass** der Kondensator (8) eine parallel zu Kühlrohren (18) aufweisende aufrechte Wand (9b) eines Gehäuseunterteils (9b) umfasst, an dessen Innenseite der Dampf kondensierbar ist.

7. Speicherbehälter nach einem der Ansprüche 1 bis 6, **dadurch gekennzeichnet, dass** in einem Speicherraum des Speicherbehälters (1) gespeicherte Wasser (2) als Kühlwasser dient.

## Claims

1. A storage tank (1) for a heating system having a storage chamber containing water (2), with a connection for withdrawing water (3) and a connection for a water inlet (4), wherein
a turbine (6), to which an externally produced vapor can be supplied by means of a steam pipe (20), is integrated in the storage tank (1) and wherein
a condenser (8) for condensing the vapor at the same time as emitting heat to the water (2) is integrated in the storage tank (1), **characterized in that**
an electricity generation unit (5) which has a generator (7) is integrated in the storage tank (1), the generator (7) and the turbine (6) are arranged in a joint closed component which is at least partially surrounded by an insulating material (16) in order to provide acoustic insulation, the turbine (6), the generator (7) and the condenser (8) are arranged in a vacuumized housing (9), wherein merely the generator (7) is cooled by the working medium, and a feed pump (10) is arranged adjacent to the condenser (8) and is at the same pressure as the condenser.

2. The storage tank according to Claim 1, **characterized in that** the condenser (8) has upright cooling pipes (18) through which the cooling medium streams as a consequence of free convection.

3. The storage tank according to any one of Claims 1 or 2, **characterized in that** the housing (9) has a housing upper part (9a), in which a turbine (6) and a generator (7) are located, a housing lower part (9c) which accommodates the feed pump (10) and a condenser (8) which connects the upper housing upper part (9a) to the housing lower part (9c), wherein the internal pressure in the housing (9) is the same.

4. The storage tank according to any one of Claims 1 to 3, **characterized in that** a bearing supply pipe (13, 17) is provided for lubricating and cooling a bearing of a shaft (15) which extends through the turbine (6) and the generator (7).

5. The storage tank according to Claim 4, **characterized in that** the bearing is configured as a friction bearing.

6. The storage tank according to any one of Claims 1 to 5, **characterized in that** the condenser (8) comprises an upright wall (9b) of a housing lower part (9b) parallel to cooling pipes (18), on the inner side of which housing lower part the vapor can be condensed.

7. The storage tank according to any one of Claims 1 to 6,
**characterized in that** water (2) stored in a storage chamber of the storage tank (1) serves as cooling water.

## Revendications

1. Récipient de stockage (1) pour une installation de chauffage, avec une chambre de stockage contenant de l'eau (2), avec un raccord pour une prise d'eau (3) et avec un raccord pour une alimentation en eau /4), sachant que, dans le récipient de stockage (1), est intégrée une turbine (6), à laquelle de la vapeur, générée à l'extérieur, peut être amenée par l'intermédiaire d'une conduite de vapeur (20), et sachant que, dans le récipient de stockage (1) est intégré un condensateur (8) pour la condensation de la vapeur, la chaleur étant transmise à l'eau (2), **caractérisé en ce que**, dans le récipient de stockage (1), est intégrée une unité de génération de courant (5), qui présente un générateur (7), que le générateur (7) et la turbine (6) sont disposés dans une construction fermée, commune, qui est entourée, au moins partiellement, de matériau insonorisant (16) pour assurer l'isolation acoustique, que la turbine (6), le générateur (7) et le condensateur (8) sont disposés dans un carter sous vide (9) et sachant que seul le générateur (7) est refroidi avec le fluide de travail, qu'une pompe d'alimentation (10) est disposée dans le voisinage du condensateur (8) et est soumise à la même pression que le condensateur.

2. Récipient de stockage selon la revendication 1, **caractérisé en ce que** le condensateur (8) présente des tubes de refroidissement (18) disposés debout, à travers lesquels le fluide de refroidissement coule suite à une convection libre.

3. Récipient de stockage selon revendication 1 ou 2, **caractérisé en ce que** le carter (9) présente une partie de carter supérieure (9a), dans laquelle sont logés une turbine (6) et un générateur (7), une partie de carter inférieure (9c), qui accueille une pompe d'alimentation (10), et un condensateur ((8), qui relie la partie de carter supérieure (9a) à la partie de carter inférieure (9c), sachant qu'une pression interne égale règne dans le carter (9).

4. Récipient de stockage selon l'une des revendications 1 à 3, **caractérisé en ce qu'**une conduite d'alimentation (13, 17) est prévue pour le graissage et le refroidissement du palier d'un arbre (15), qui traverse la turbine (6) et le générateur (7).

5. Récipient de stockage selon la revendication 4, **caractérisé en ce que** le palier est réalisé sous la forme d'un palier lisse.

6. Récipient de stockage selon l'une des revendications 1 à 5, **caractérisé en ce que** le condensateur (8) comprend une paroi verticale (9b) d'une partie de carter inférieure (9b), parallèle à des tubes de refroidissements (18), sur la face intérieure de laquelle la vapeur peut se condenser.

7. Récipient de stockage selon l'une des revendications 1 à 6, **caractérisé en ce que** l'eau (2), stockée dans une chambre de stockage du récipient de stockage (1), sert d'eau de refroidissement.
